# EUROPEAN PATENT APPLICATION

(11) **EP 2 540 679 A1**
(43) Date of publication of application: **02.01.2013**
(21) Application number: 11759421.8
(22) Date of filing: 23.03.2011
(51) Int. Cl.: C03B 7/10

(54) **GOB FORMING DEVICE**

(30) Priority: 26.03.2010 JP 2010071911
(71) Applicant: Nihon Yamamura Glass Co., Ltd., Hyogo 660-8580 (JP)
(72) Inventor: MATSUMOTO Shinsuke, Amagasaki-shi Hyogo 660-8580 (JP); KATAOKA Masaki, Amagasaki-shi Hyogo 660-8580 (JP); OONO Shintaro, Amagasaki-shi Hyogo 660-8580 (JP); MORIMITSU Yasuhiro, Amagasaki-shi Hyogo 660-8580 (JP); NISHIMURA Takahiro, Amagasaki-shi Hyogo 660-8580 (JP)
(74) Representative: Manitz, Finsterwald & Partner GbR
(86) International application number: PCT/JP2011/056940
(87) International publication number: WO 2011/118616

(57) **Abstract**

Disclosed is a gob producing device which is provided with a molten glass feeder mechanism 1 having an orifice 11 at the bottom portion thereof and a cutter mechanism 2 for cutting the molten glass pushed out through the orifice 11 so as to be suspended therefrom and producing a gob g. The gob producing device is further provided with a cutter position moving mechanism for adjusting the height of the cutter mechanism 2 by moving the mechanism, a gob observing device 6 for observing the three-dimensional view of the falling gob g, an image processing device 7 for obtaining the length L of the gob g from the spatial position data of the gob g obtained by the gob observing device 6 to determine the acceptance or rejection of the length and calculating correction data for correcting the height of the cutter mechanism 2 from the difference between the measured value and a set value of the length L of the gob when the obtained length is determined as being not appropriate, and a control device 8 for moving the cutter mechanism 2 by controlling the operation of the cutter position moving mechanism on the basis of the correction data.

## Description

### FIELD OF THE INVENTION

The present invention relates to glass product forming facilities in which a glass product such as a glass bottle is formed by using a mold, specifically to a gob producing device for producing a lump of molten glass supplied into the mold, which is called "gob".

### BACKGROUND OF THE ART

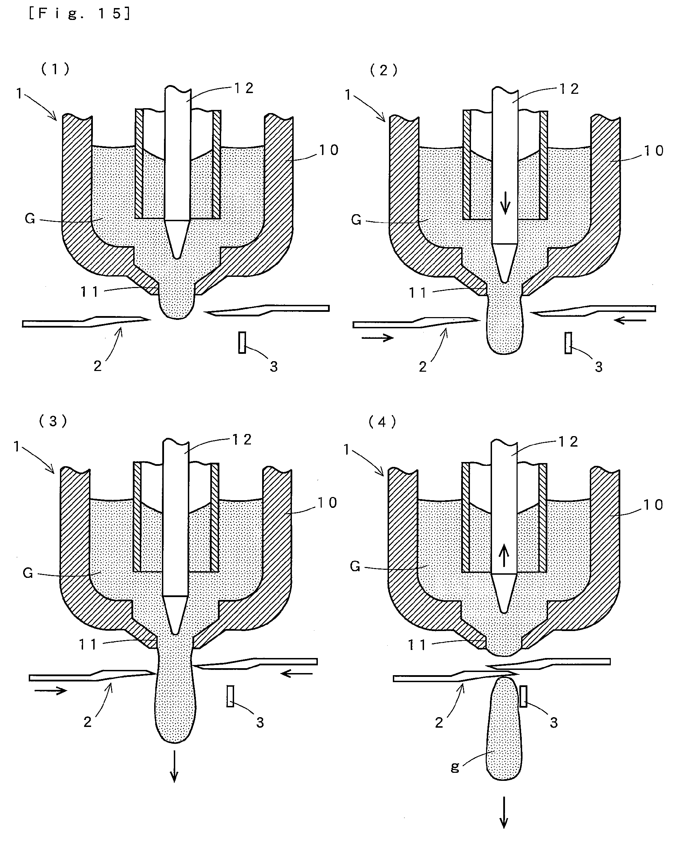

Such a gob producing device includes a molten glass feeder mechanism 1, which is called "feeder", having an orifice 11 provided at the bottom portion of a spout 10 in which molten glass G is held, and a cutter mechanism 2 called "shear mechanism", which is arranged right below the orifice 11, as shown in Fig. 15 (Reference is made, for example, to a patent literature 1). A plunger 12 is vertically movably arranged in the spout 10 to push out the molten glass G through the orifice 11. As the plunger 12 moves downward from an upper dead point, the molten glass G in the spout 10 is pushed out through the orifice 11 and suspended in a column-like shape (see Figs. 15(1) and 15(2)).

Just after the plunger 12 turns to rise subsequent to reaching a lower dead point (see Fig. 15(3)) as shown in an example, the cutter mechanism 2 operates to cut the molten glass G which is suspended from the orifice 11 so that a gob g is produced (see Fig. 15(4)). Then the gob g falls downward and is sorted into a plurality of sections of a bottle making machine by a delivery means such as a scoop, a trough and a deflector, and then delivered to a blank mold (not shown).

A blank mold is made in various sizes and shapes in accordance with the final form of a glass bottle to be formed. In order to keep constant the quality, the capacity, the thickness and so forth of a glass bottle and prevent the occurrence of poor appearance such as wrinkles and chill marks, it is required to control the weight and shape of a gob in conformity to the size and shape of a blank mold and constantly reproduce a gob with constant weight and shape. In the molten glass feeder mechanism 1, when the plunger 12 vertically moves in the spout 10, the molten glass G is pushed out or drawn in through the orifice 11 so that the shape of the gob g is changed depending on the movement of the plunger 12. As such, when the molten glass G is pushed out through the orifice 11 so as to be suspended therefrom, the shape of the gob g such as the length thereof is determined depending on the timing at which the suspended molten glass G is cut off and the position (height) at which the suspended molten glass G is cut off.
The position at which the molten glass G is cut is initially set prior to the operation of the device by manually moving the cutter mechanism 2 in a vertical direction to perform the height adjustment.

Further, if the posture of the gob g is tilted at the time of falling, the gob g comes into contact with a mechanism such as a scoop funnel during falling, and the falling rate is decreased, thereby causing the forming condition (for example, forming time) in the blank mold to change, and therefore the gob g is required to be dropped by controlling the swing thereof when the gob g is cut off. In order to control the swing of the gob g, a half cylinder shaped guide member 3 called "drop guide" is attached at the lower side of the cutter mechanism 2, and the initial setting is performed by manually moving the guide member 3 in adjustment to the right or left and/or front or rear.

### PRIOR ART

### PATENT LITERATURE

[Patent literature 1] Japanese patent publication 4257906

### SUMMARY OF THE INVENTION

### PROBLEM SOLVED BY THE INVENTION

However, even if the height of the cutter mechanism 2 and the position of the guide member 3 are adjusted prior to the operation of the device, when an environment condition such as ambient temperature is changed during operation, the change affects the temperature and so forth of the molten glass G. As a result, the gob g is changed in the length thereof or dropped with a tilted posture due to the move in the center of gravity and so forth, thereby exerting an adverse impact on the quality of a glass bottle being produced.
Each time a change in the length of the gob g and so forth becomes significant, readjustment needs to be performed with respect to the positions of the cutter mechanism 2 and the guide member 3, and thus a problem occurs that a burden on an operator performing such an adjustment operation is increased.

The present invention is made in view of the aforementioned problem and has an object to provide a gob producing device, which observes a three-dimensional view of a falling gob and automatically adjusts the height of a cutter mechanism and a position of a guide member by obtaining the length and the tilt of the gob from the spatial position data thereof, whereby a correction processing is automatically applied to a change in the length of the gob and the tilt of the gob due to a change in the surrounding environment and so forth, and thus the quality of a molded product is maintained while a manual operation by an operator is no longer required for readjustment.

### MEANS FOR SOLVING THE PROBLEM

A first invention relates to a gob producing device comprising: a molten glass feeder mechanism which has an orifice provided at the bottom portion of a spout in which molten glass is held and a plunger vertically movably arranged in the spout to push out the molten glass through the orifice; and a cutter mechanism which is located below the orifice and cuts the molten glass pushed out from the orifice so as to be suspended therefrom, thereby producing a gob, wherein the gob producing device is further provided with a cutter position moving mechanism for adjusting the height of the cutter mechanism by vertically moving said cutter mechanism with respect to the orifice, a gob observing device for obtaining the spatial position data of the gob by observing a three-dimensional view of the gob falling after being cut by the cutter mechanism, a length measuring means for measuring the length of the gob from said spatial position data of the gob, a determining means for determining acceptance or rejection with respect to the length of the gob by comparing a measured length of the gob with a set value, a computing means for calculating correction data to correct the height of the cutter mechanism from a difference between a measured value of the length of the gob and a set value when the length of the gob is determined as being not appropriate, and a control means for moving the cutter mechanism by controlling the operation of the cutter position moving mechanism on the basis of said correction data.

In the gob producing device configured as described above, when the plunger vertically moves in the spout where the molted glass is held, the molten glass is pushed out through the orifice at the bottom portion of the spout so as to be suspended therefrom. The suspended molten glass is cut at a given timing by the cutter mechanism, and thereby the gob is produced. The three-dimensional view of the falling gob is observed by the gob observing device such that the spatial position data of the gob is obtained and the length of the gob is measured by the length measuring means from the spatial position data of the gob. The measured value of the length of the gob is compared with a set value and acceptance or rejection with respect to the length of the gob is determined by the determining means, and if determined as being not appropriate, the computing means calculates correction data to correct the height of the cutter mechanism from a difference between the measured value of the length of the gob and the set value. The control means controls the operation of the cutter position moving mechanism on the basis of the correction data calculated by the computing means and adjusts the height of the cutter mechanism by vertically moving the cutter mechanism with respect to the orifice.

In a preferable embodiment according to the first invention, said cutter position moving mechanism includes as a drive source a motor rotating respectively in a forward or backward direction so as to move the cutter mechanism in a vertical direction with respect to the orifice by a distance corresponding to the rotation angle of the motor.
According to the embodiment, by using a pulse motor for the motor, an automatic height adjustment for the cutter mechanism can be easily realized.

A second invention relates to a gob producing device comprising: a molten glass feeder mechanism which has an orifice provided at the bottom portion of a spout in which molten glass is held and a plunger vertically movably arranged in the spout to push out the molten glass through the orifice; and a cutter mechanism which is located below the orifice and cuts the molten glass pushed out from the orifice so as to be suspended therefrom thereby producing a gob, wherein the gob producing device is further provided with a guide member located below the cutter mechanism for dropping the gob with controlling the swing of the gob when the gob is cut off by the cutter mechanism, a guide position moving mechanism for adjusting the position of the guide member on the horizontal surface with respect to the falling path of the gob by moving said guide member in given two directions orthogonal to each other on the horizontal surface, a gob observing device for obtaining the spatial position data of the gob by observing a three-dimensional view of the gob falling after being cut by the cutter mechanism, a tilt measuring means for measuring the tilt of the gob in two directions orthogonal to each other on said horizontal surface thereof from said spatial position data of the gob, a determining means for determining whether or not the measured value of the tilt of the gob is within the permissible range, a computing means for calculating correction data to correct the position of the guide member on the horizontal surface thereof from the measured value of the tilt of the gob when the tilt of the gob is determined as being not within the permissible range, and a control means for moving the guide member by controlling the operation of the guide position moving mechanism on the basis of said correction data.
A third invention relates to a gob producing device wherein the gob producing device according to the aforementioned first invention is further provided with the guide member, the guide position moving mechanism, the tilt measuring means, the determining means and the control means as described above.

In the gob producing device configured as described above, when the molten glass pushed out through the orifice so as to be suspended therefrom is cut off by the cutter mechanism, the swing of the gob when the gob is cut off is controlled by the guide member. The three-dimensional-view of the falling gob is observed by the gob observing device so that the spatial position data of the gob is obtained, and the tilt of the gob in given two directions orthogonal to each other on the horizontal surface thereof is measured by the tilt measuring means from the spatial position data of the gob. The determining means determines whether or not the measured value of the tilt of the gob is within the permissible range, and when the measured value of the tilt of the gob is determined as being not within the permissible range, the computing means calculates correction data to correct the position of the guide member on the horizontal surface thereof from the measured value of the tilt of the gob. The control means controls the operation of the guide position moving mechanism on the basis of the correction data computed by the computing means and adjusts the position of the guide member by moving the guide member in the given two directions orthogonal to each other on the horizontal surface with respect to the falling path of the gob.

In the configuration of the first to third inventions as described above, the gob observing device can be constituted of, for example, three imaging devices, and the length measuring means, the tilt measuring means, the determining means, the computing means and the control means can be realized by a programmed computer.

In a preferable embodiment according to the second and third inventions, said guide position moving mechanism includes as drive sources a first and a second motors rotating respectively in a forward or backward direction so as to move the guide member by a distance corresponding to the rotation angle of the first motor in one direction among said two directions and move the guide member by a distance corresponding to the rotation angle of the second motor in the other direction among said two directions. According to the embodiment, by using pulse motors for the first and the second motors, an automatic position adjustment for the guide member can be easily realized.

### ADVANTAGEOUS EFFECT OF THE INVENTION

According to the present invention, the three-dimensional view of a falling gob is observed and the height of a cutter mechanism or the position of a guide member on the horizontal surface thereof is automatically adjusted by obtaining the length or the tilt of the gob from the spatial position data of the gob, and thus it is possible to automatically correct a change in the length of the gob as well as the tilt of the gob due to a change in the surrounding environment, whereby it is possible to maintain the quality and so forth of a molded product. Also, a manual operation by an operator is no longer required for the readjustment of the height of a cutter mechanism and the position of a guide member, and thus the burden on an operator for adjustment operation can be significantly reduced.

### BRIEF DESCRIPTION OF THE DRAWINGS

Fig. 1 is a view illustrating a schematic configuration of a gob producing device and a state of producing the gob.
Fig. 2 is a plan view illustrating an essential portion of a cutter mechanism.
Fig. 3 is a front view illustrating a schematic configuration of a cutter position moving mechanism.
Fig. 4 is a bottom view illustrating a schematic configuration of a guide member and a guide position moving mechanism.
Fig. 5 is a front view illustrating the cause for the swing of the gob when the gob is cut off.
Fig. 6 is a bottom view illustrating the cause for the swing of the gob when the gob is cut off.
Fig. 7 is a front view illustrating a state where the height of a cutter mechanism is being adjusted.
Fig. 8 is a front view illustrating a state where the swing of a gob is being controlled by a guide member and a state where the position of the guide member is being adjusted.
Fig. 9 is a bottom view illustrating a state where the swing of a gob is being controlled by a guide member and a state where the position of the guide member is being adjusted.
Fig. 10 is a block diagram illustrating an electrical configuration of a control device.
Fig. 11 is a block diagram illustrating an electrical configuration of an image processing device.
Fig. 12 is a flowchart illustrating a flow of control for a length correction by means of the image processing device and the control device.
Fig. 13 is a flowchart illustrating a flow of control for a tilt correction by means of the image processing device and the control device.
Fig. 14 is a flowchart illustrating a flow of control by means of the image processing device and the control device in another embodiment.
Fig. 15 is a view illustrating a process of producing the gob.

### BEST MODE FOR CARRYING OUT THE INVENTION

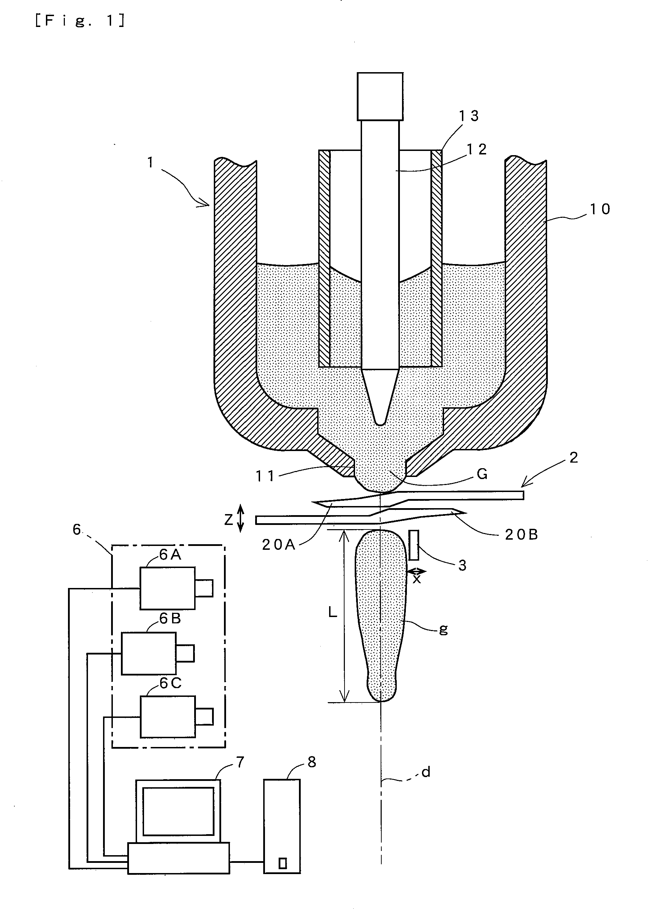

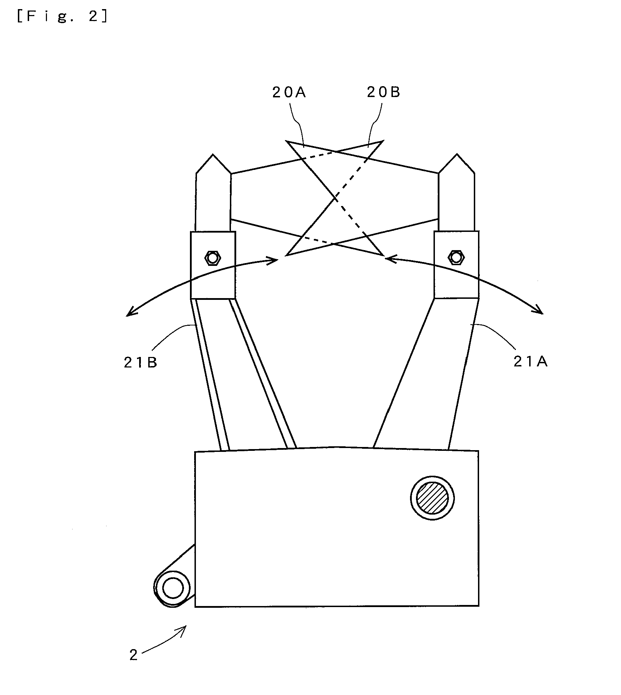

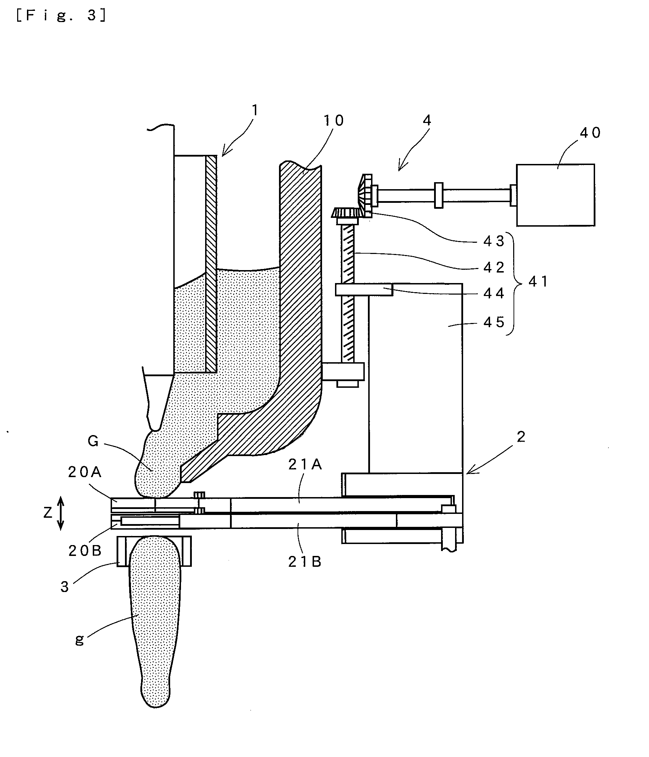

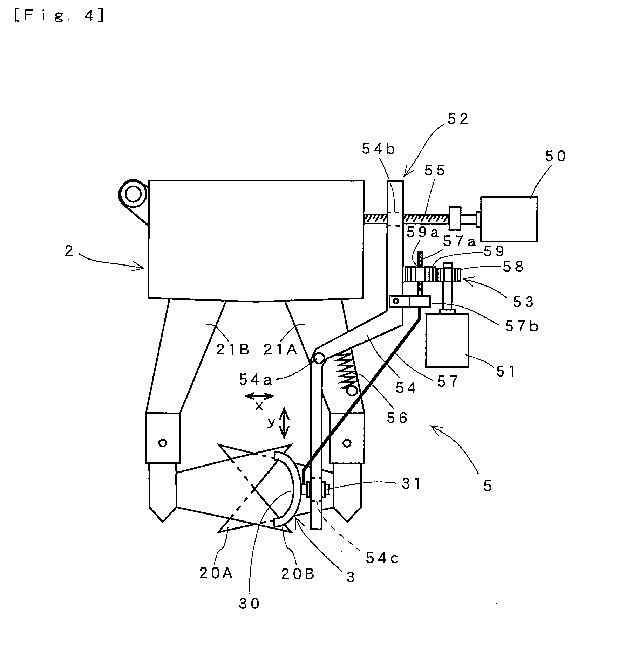

A drawing illustrates a preferable embodiment for practicing the present invention. However the present invention is not limited to the embodiment, and the scope of the present invention is not limited by the embodiment.
The gob producing device shown in drawings produces gobs g which are sequentially supplied to blank molds arranged at a plurality of sections of a bottle making machine, and includes a molten glass feeder mechanism 1 and a gob observing device 6 shown in Fig. 1, a cutter mechanism 2 shown in Figs. 1 and 2, a cutter position moving mechanism 4 shown in Fig. 3, a half cylindrical guide member 3 shown in Figs. 1, 3 and 4, and a guide position moving mechanism 5 shown in Fig. 4.

The molten glass feeder mechanism 1 is provided with a spout 10 for holding molten glass G introduced from a glass fusing furnace (not shown) and an orifice 11 for pushing out downward the molten glass G is formed at the center bottom of the spout 10. The cutter mechanism 2 is for cutting the molten glass G which is pushed out through the orifice 11 so as to be suspended therefrom in a column-like shape by reciprocating a pair of shear blades 20A, 20B, and is arranged below the orifice 11. The cutter position moving mechanism 4 is for adjusting the height of the cutter mechanism 2 by moving the shear blades 20A, 20B upward in a direction of getting closer to the orifice 11 or downward in a direction of getting away from the orifice 11 (in a vertical direction as shown by an arrow z in the drawings and hereinafter the direction is referred to as "z direction").

The guide member 3 is to control the swing of the molten glass G when the gob g is cut off and adjust the falling posture of the gob g and is positioned below the pair of shear blades 20A, 20B of the cutter mechanism 2. The guide position moving mechanism 5 is for adjusting the position of the guide member 3 on a virtual horizontal surface positioned at the height of the guide member 3 (two-dimensional coordinate position) by moving the guide member 3 in given two directions orthogonal to each other on the horizontal surface with respect to the falling path d of the gob g right below the orifice 11, that is, a direction to which the gob 8 is pressed by a lower side shear blade 20B (the direction is shown by an arrow x in the drawing and hereinafter is referred to as "x direction") and a direction orthogonal to the x direction (the direction is shown by an arrow y in the drawing and hereinafter is referred to as "y direction").

A plunger 12 and a tube 13 are vertically movably arranged inside the spout 10 of the molten glass feeder mechanism 1 as shown in Fig. 1. The tube 13 is for controlling the weight of the gob g. The amount of the molten glass G pushed out through the orifice 11 is changed in accordance with the vertical movement of the tube 13 and thus the weight of the gob g is changed. The plunger 12 is for pushing out the molten glass G through the orifice 11 as well as setting the shape of the gob g. As the plunger 12 is lowered, the molten glass G is pushed out through the orifice 11 so as to be suspended therefrom, and as the plunger 12 is raised, the suspending molten glass G is drawn up into the orifice 11, and thus the shape of the gob g is determined depending on the timing and the position at which the molten glass G is cut off with respect to the vertical movement of the plunger 12. Further, various types of the plunger 12 different in size and tip shape are selectively used depending on the size and the shape of a glass bottle to be formed.

Fig. 1 shows a state just after the molten glass G pushed out through the orifice 11 so as to be suspended therefrom is cut off by the cutter mechanism 2, and the cutter mechanism 2 is operated at a given timing just after the plunger 12 turns to rise subsequent to reaching a lower dead point. Notably, the cutter mechanism 2 can be operated at any timing at which the plunger 12 is positioned between the upper dead end and the lower dead end. In the cutter mechanism 2 according to this embodiment, the shear blades 20A, 20B are attached to the respective tips of a pair of arms 21A, 21B capable of opening and closing operation such that the shear blades are opposite to each other as shown in Fig. 2. When respective arms 21A, 21B are rotated in a closing direction around the base end sections, the shear blades 20A, 20B are vertically overlapped and the cutting edges are advanced in opposing directions, and thus the molten glass G suspended from the orifice is cut off such that a rod-like gob g having a given length of L is produced. The respective arms 21A, 21B are driven to open and close by a cutter drive mechanism (not shown).

Although the cutter mechanism 2 according to this embodiment is to rotate the shear blades 20A, 20B integrally with the respective arms 21A, 21B, instead, the shear blades oppositely arranged to each other can be reciprocated.

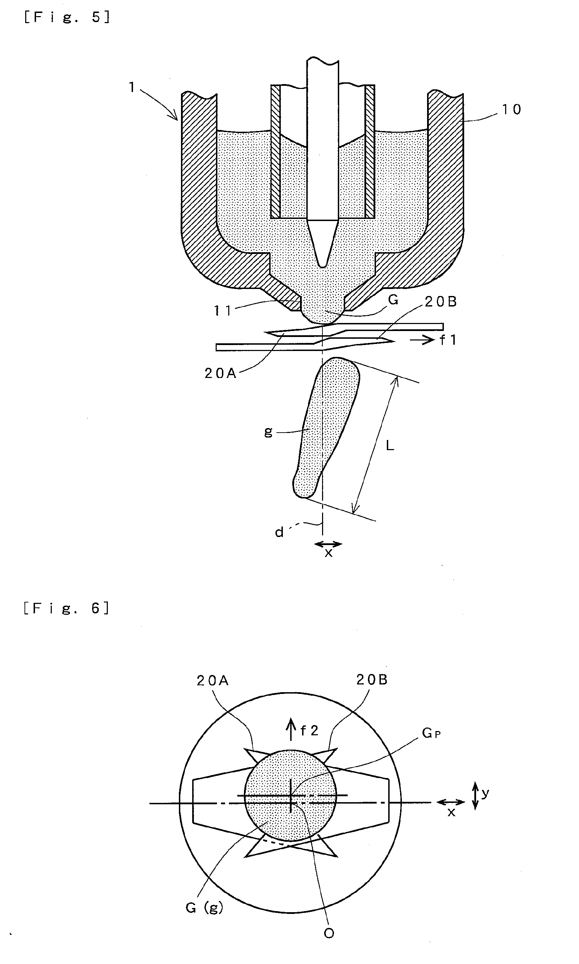

When the molten glass G is cut off, since a pressing force f1 due to the lower side shear blade 20B is applied to the molten glass G as shown in Fig. 5, the upper end portion of the gob g is forced to swing in the pressing direction, that is, in the x direction. However, the swing is controlled by the gob g coming into contact with the guide member 3, whereby the falling posture of the gob g is adjusted so as not to get tilted in the x direction.

Further, if the center O of the shear blades 20A, 20B is deviated in the y direction from the center of gravity Gp of the suspending molten glass G as shown in Fig. 6, a pressing force f2 in the y direction of the upper and lower side shear blades 20A, 20B is applied to the molten glass G so that the upper end portion of the gob g is made to swing in the y direction. However, the swing is controlled by the gob g coming into contact with the guide member 3, whereby the falling posture of the gob g is adjusted so as not to get tilted in the y direction. The gob g falls downward while keeping an upright posture and is introduced into any one of sections of a bottle making machine by means of a delivery means such as a scoops, a troughs and a deflector.

The cutter position moving mechanism 4 as shown in Fig. 3 includes as a drive source a motor 40 for moving a cutter, which is rotatable respectively in a forward or backward direction so as to move the shear blades 20A, 20B by a distance corresponding to the rotation angle (the number of rotations) of the motor 40 via a driving force transmission mechanism 41 in a vertical direction, that is, in a direction of getting closer to the orifice 11 of the spout 10 or in a direction of getting away from the orifice 11 (z direction). In this embodiment, a pulse motor (stepping motor) which rotates by an angle corresponding to the number of supplied driving pulses is used as the motor 40 for moving a cutter.

The aforementioned driving force transmission mechanism 41 according to this embodiment is constituted of a feed screw 42 rotatably supported respectively in a forward or backward direction in an upright posture at the outer surface of the spout 10 of the molten glass feeder mechanism 1, a gear mechanism 43 for transmitting the rotation of the motor 40 to the feed screw 42, and a nut member 44 fed in an upward direction or a downward direction (z direction) on the feed screw 42 as the feed screw 42 rotates either in a forward direction or in a backward direction, and the shear blades 20A, 20B of the cutter mechanism 2 are horizontally held by a shear box 45 integrally formed with the nut member 44.

A moving amount Δz either in an upper direction or in a lower direction of the shear blades 20A, 20B in the cutter mechanism 2 is equal to the moving distance of the nut member 44 fed either in an upper direction or in a lower direction on the feed screw 42. The moving distance of the nut member 44 is determined by the number of rotations of the feed screw 42 and the number of rotations of the feed screw 42 is determined by the rotation angle of the motor 40 (number of rotations), and thus the moving direction of the shear blades 20A, 20B is determined by the rotation direction of the motor and the moving amount Δz of the shear blades 20A, 20B is determined by the rotation angle of the motor 40 (number of rotations).

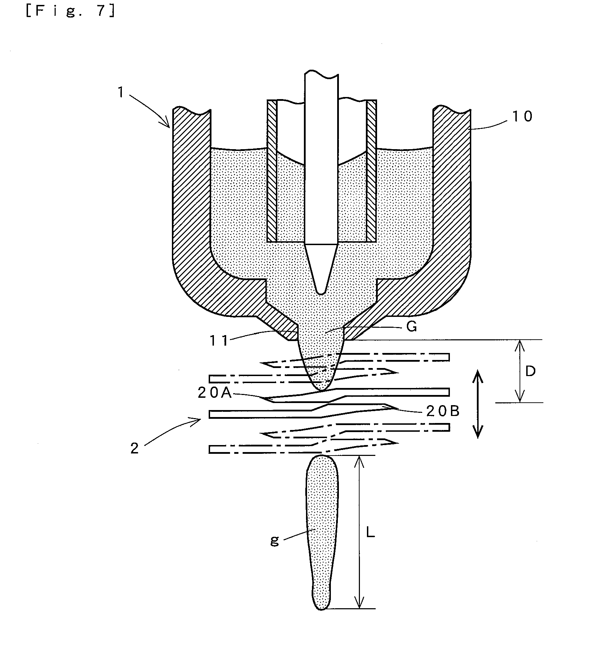

When the gob g is produced by cutting the molten glass G with the shear blades 20A, 20B of the cutter mechanism 2, a length L of the gob g can be adjusted by a distance D between the orifice 11 and the cutter mechanism 2, that is, by the height of the cutter mechanism 2 as shown in Fig. 7. When the shear blades 20A, 20B of the cutter mechanism 2 is positioned at a height as shown in the solid line in Fig. 7, in order to increase the length L of the gob g without changing the weight of the gob g, the length of the gob g can be adjusted by moving downward the shear blades 20A, 20B and increasing the distance D from the orifice 11. In contrast, in order to decrease the length of the gob g without changing the weight of the gob g, the length of the gob g can be adjusted by moving upward the shear blades 20A, 20B and decreasing the distance D from the orifice 11.

Since the relationship between the moving amount Δz of the shear blades 20A, 20B and the changing amount Δ L in the length L of the gob g can be mapped to a table on the basis of preliminarily acquired experimental data, when the length L of the gob g is measured in a measuring process based on an imaging process as described below, the moving amount Δz of the shear blades 20A, 20B can be acquired from a difference ΔL between the measured value of the length L in the gob g and the set value of the length L in the gob g by referencing the table, and the rotation angle (number of rotations) of the motor 40 can be calculated from the moving amount Δz.

The guide member 3 shown in Fig. 4 is in a half cylinder-like shape made by cutting a cylindrical body in the longitudinal direction and the concave surface thereof constitutes a guide surface 30 along the contour of the upper end portion of the gob g. A support piece 31 slidably supported at the tip section of a support arm 54 as described below is provided on the rear surface of the guide member 3 projecting therefrom.

The guide position moving mechanism 5 includes as drive sources a first and a second motors 50, 51 for moving the position of a guide, which are rotatable respectively in a forward or backward direction, and the guide member 3 is moved in the x direction with respect to a falling path d of the gob g by a distance corresponding to the rotation angle (number of rotations) of the first motor 50 via a first drive force transmission mechanism 52 while the guide member 3 is moved in the y direction by a distance corresponding to the rotation angle (number of rotations) of the second motor 51 via a second drive force transmission mechanism 53. In this embodiment, pulse motors (stepping motors) are used for the respective motors 50, 51 for moving a guide as the motor 40 for moving the cutter mechanism described above.

The first drive force transmission mechanism 52 according to this embodiment includes a support arm 54 in which the center of the length thereof is supported as a pivot point 54a at a proper position of one arm 21A of the cutter mechanism 2 and a feed screw 55 which moves the tip section of the support arm 54 in the x direction by a distance corresponding to the rotation angle (number of rotations) of the first motor 50 by rotating integrally with the first motor 50 and moving the support arm 54 in response to the rotation of the first motor 50. The feed screw 55 is screwed into a screw hole 54b which is formed at the base end section of the support arm 54 such that the tip thereof has contact with a frame of the cutter mechanism 2. An elongated hole 54c into which the support piece 31 of the guide member 3 is inserted slidably in the length direction of the support arm 54 and held in place there, is formed at the tip section of the support arm 54.
When the feed screw 55 rotates, the base end section of the support arm 54 is fed by the screw and thus the support arm 54 is moved such that the guide member 3 is moved in the x direction integrally with the tip section of the support arm 54. A spring pressure of a compressed spring 56 is constantly applied to the support arm 54 because the tip section of the support arm 54 is pressed backward with the tip of the feed screw 55 being pressed against the frame of the cutter mechanism 2.

The second drive force transmission mechanism 53 includes a rod 57 in which the tip thereof is coupled to the support piece 31 of the guide member 3 while the base end section side thereof is slidably supported by a bearing member 57b supported by said support arm 54, and a pair of gears 58, 59 which reciprocates the rod 57 in the axis direction by a distance corresponding to the rotation angle (number of rotations) of the second motor 51 thereby moving the tip thereof. The respective gears 58, 58 are engaged with each other, and one gear 58 is coupled with the second motor 51. The other gear 59 has an inside hole threaded into a screw hole 59a and a screw axis portion 57a formed at the tip section of the rod 57 is screwed into the screw hole 59a. When the gears 58, 59 are rotated either in forward or in backward direction integrally with the second motor 51, the rod 57 is fed by the screw such that the support piece 31 of the guide member 3 is slid in the length direction of the support arm 54 and the guide member 3 is moved in the y direction.

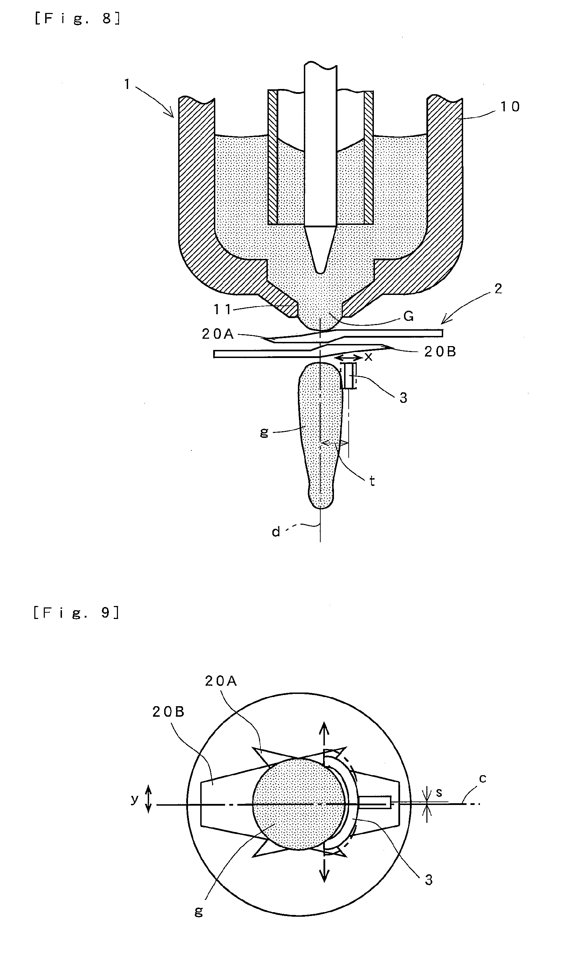

When the gob g is produced by cutting the molten glass G with the shear blades 20A, 20B of the cutter mechanism 2, the tilt of the gob g can be adjusted by a distance t of the guide member 3 from the falling path d of the gob g in the direction of the gob g being pressed by the lower side shear blade 20B (x direction), that is, the position of the guide member 3 in the x direction as shown in Fig. 8, and a distance s of the guide member 3 from the center line c of the shear blades 20A, 20B in the y direction, that is, the position of the guide member 3 in the y direction as shown in Fig. 9. When the guide member 3 is positioned at a position as shown in the solid lines in Figs. 8 and 9, in order to correct the tilt of the gob g, the distance t of the guide member 3 is modified with respect to the tilt θx in the x direction while the distance s of the guide member 3 is modified with respect to the tilt θy in the y direction respectively by moving the guide member 3.

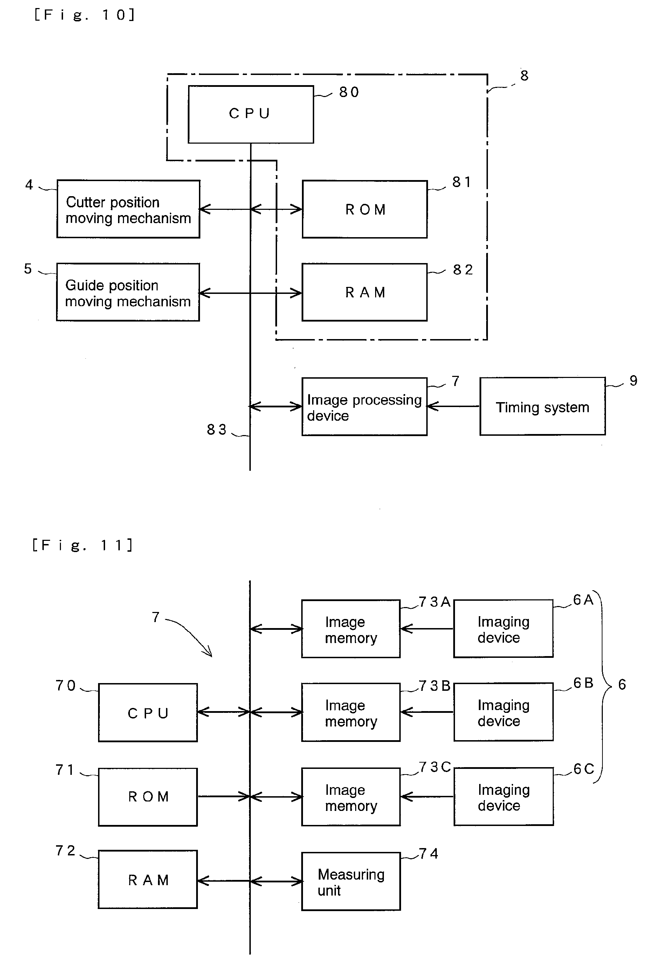

Now going back to Fig. 1, a gob observing device 6 is constituted of at least two (three in the example shown in the drawing) imaging devices 6A, 6B and 6C, which observes a three-dimensional view of the gob g falling after being cut off by the cutter mechanism 2 and obtains the spatial position data of the gob g. Each of the imaging devices 6A to 6C according to this embodiment is constituted of a CCD camera and a spatial region covering the whole image of the gob g is arranged to be included within a view of each of the imaging devices 6A to 6C in order to obtain the whole image of the falling gob g.
Each imaging device 6A to 6C is connected to an image processing device 7 and when a trigger signal is output to the image processing device 7 from a timing system 9 shown in Fig. 10, each imaging device 6A to 6C takes an image of the gob g all together, then two-dimensional images of the gob g are fed from each imaging device 6A to 6C into the image processing device 7. Said timing system 9 outputs a trigger signal at the timing at which the suspending molten glass G is cut off by the cutter mechanism 2 and the timing is acquired from each timing of the phase of said plunger 12 or the cutting operation of the cutter mechanism 2. Notably, the timing system 9 generates and outputs a signal for instructing a timing of the start and the stop of operation for each of various mechanisms constituting the gob producing device and the bottle making machine such that the mechanisms are operated in a predetermined order.

The image processing device 7 obtains the spatial position data of the gob g (specifically three-dimensional coordinate data) from three two-dimensional images taken by each of the imaging devices 6A to 6C and the length L and the respective tilts θx, θy in the x direction and the y direction of the gob g are measured from the spatial position data. The acceptance or rejection of a measured value of the length L and the tilts θx, θy of the gob g is determined by a control device 8, and when determining rejection the control device 8 controls the operation of the cutter position moving mechanism 4 or the guide position moving mechanism 5 and thereby correcting the height of the cutter mechanism 2 or the position of the guide member 3 on the horizontal surface thereof.

Said control device 8 is constituted of a microcomputer including a CPU 80 for principally performing control and computation, a ROM 81 for storing a program and fixed data, a RAM 82 for storing various data, and so forth as shown in Fig.10. The CPU 80 is connected via a bus 83 to the image processing device 7, the cutter position moving mechanism 4, the guide position moving mechanism 5 and so forth.
The CPU 80 executes a program stored in the ROM 81 and serially controls the input/output operations for the above-mentioned each input/output device while writing and reading data to and from the RAM 82.

Said image processing device 7 is constituted of a microcomputer including a CPU 70 for principally performing control and computation, a ROM 71 for storing a program and fixed data, and a RAM 72 used for reading and writing data as shown in Fig. 11. Two-dimensional images obtained by each imaging device 6A to 6C are stored in three image memories 73A to 73C respectively. The CPU 70 performs a mapping processing or the like between image points on the three two-dimensional images in accordance with a program for performing processing of three-dimensional view, which is stored in the ROM 71, and thereby obtaining the spatial position data (three-dimensional coordinate data) of the gob g. A measuring unit 74 performs processing for measuring the length L and each tilt θx, θy in the x and the y directions of the gob g from the spatial position data under the control of the CPU 70.

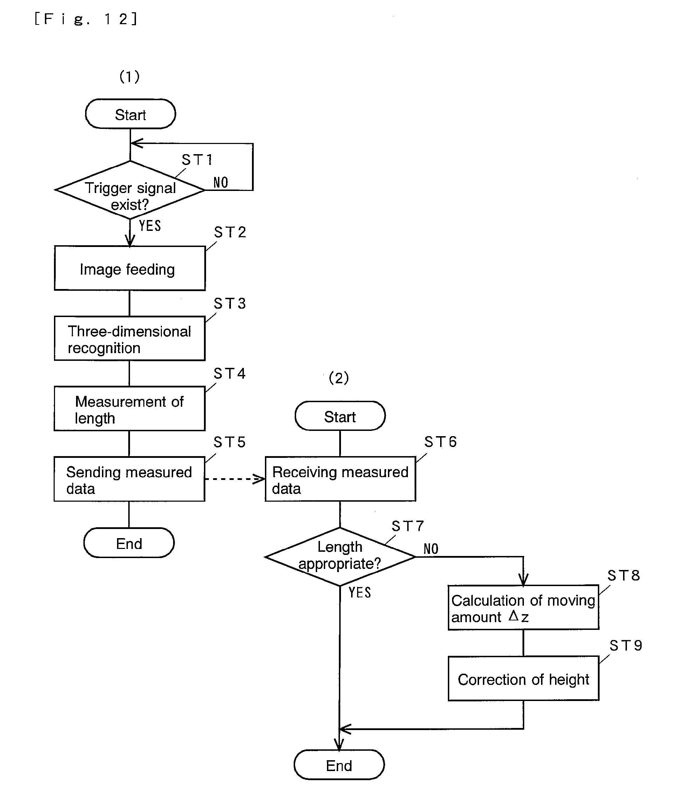

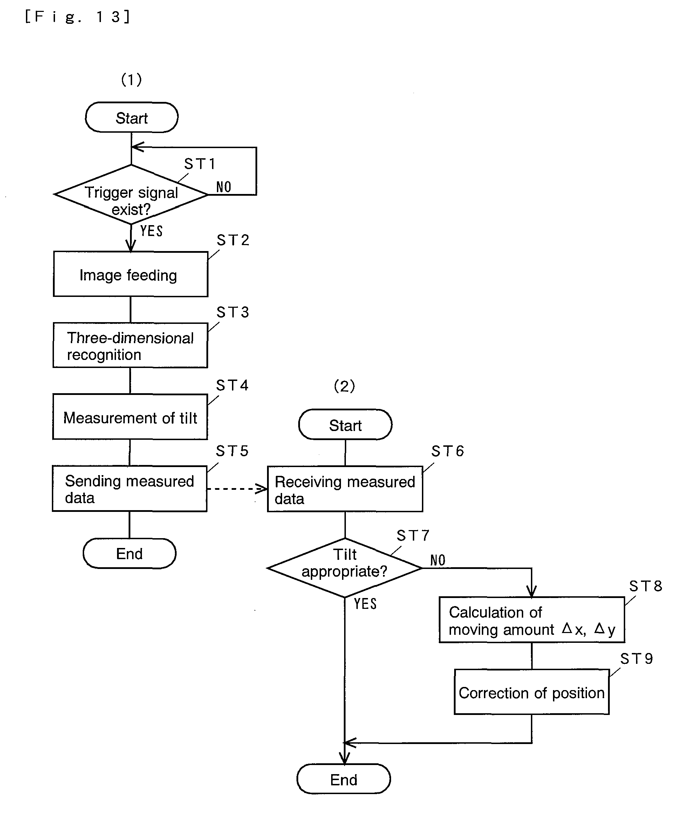

In response to the measurement result of the image processing device 7, the CPU 80 in the control device 8 sequentially performs the control step shown in Fig. 12(1) (shown by "ST" (an abbreviation of step) in the drawing), corrects the height of the cutter mechanism 2, and holds the length L of the gob g at a constant value, and performs the step shown in Fig. 13(1) thereby correcting the position of the guide member 3 on the horizontal surface thereof and correcting the posture of the gob g such that each tilt θx, θy in the x and the y directions of the gob g is within the permissible range.

First, each control step for the length correction is discussed as shown in Fig. 12. In ST1 of Fig. 12(1), when a trigger signal is input from the timing system 9 into the image processing device 7, the CPU 70 sends an imaging instruction to the imaging devices 6A to 6C to take an image of the falling gob g at the same time. The two-dimensional images of the gob g obtained by each of the imaging devices 6A to 6C are fed into the image processing device 7 (ST2) and stored in the respective image memories 73A to 73C, then the CPU 70 performs processing for three-dimensional image recognition such as the mapping of the image points on the three two-dimensional images thereby obtaining the spatial position data (three-dimensional coordinate data) of the gob g and storing the data in the RAM 72 (ST3).

Next, the CPU 70 instructs the measuring unit 74 to perform processing for measuring the length L of the gob g from the spatial position data and sends the measured data to the control device 8 (ST 4, 5). The CPU 80 in the control device 8, when receiving the measured data of the length L in ST 6 shown in Fig. 12(2), determines whether or not the length L of the gob g is appropriate by comparing the measured data with a set data (ST7). If the measured data is not appropriate, the program advances from ST7 to ST8 and the CPU 70 calculates a moving amount Δz of the shear blades 20A, 20B as correction data for correcting the height of the cutter mechanism 2 from a difference ΔL between the measured value and the set value of the length L of the gob g.

When the moving amount Δz of the shear blades 20A, 20B is calculated in ST8, the program advances from ST8 to ST9 in order to correct the height of the shear blades 20A, 20B, and the CPU 80 rotates the first motor 40 by a rotation angle obtained by calculation and thereby moves the shear blades 20A, 20B by the moving amount Δz to correct the height of the shear blades.

Next, each control step for the tilt correction is discussed as shown in Fig. 13. In ST1 shown in Fig. 13(1), when a trigger signal is input from the timing system 9 into the image processing device 7, the CPU 70 sends an imaging instruction to the imaging devices 6A to 6C to take an image of the falling gob g at the same time. The two-dimensional images of the gob g obtained by each of the imaging devices 6A to 6C are fed into the image processing device 7 (ST2) and stored in the respective image memories 73A to 73C, then the CPU 70 performs processing for three-dimensional image recognition such as the mapping of the image points on the three two-dimensional images thereby obtaining the spatial position data (three-dimensional coordinate data) of the gob g and storing the data in the RAM 72 (ST3).

Next, the CPU 70 instructs the measuring unit 74 to perform processing for measuring the tilt θx in the x direction and the tilt θy in the y direction of the gob g from the spatial position data and sends the measured data to the control device 8 (ST 4, 5). The CPU 80 in the control device 8, when receiving the measured data of the tilt θx and the tilt θy in ST 6 shown in Fig. 13(2), determines whether or not each measured data is within a permissible range (ST7). If at least either one of the tilt θx and θy is not within the permissible range, the program advances from ST7 to ST8 and the CPU 70 calculates a moving amount ΔX in the x direction or a moving amount Δy in the y direction of the guide member 3 as correction data for correcting the position of the guide member 3 on the horizontal surface thereof from the measured value of the tilt θx or θy.

When the moving amount of the guide member 3 is calculated in ST8, the program advances from ST8 to ST9 in order to correct the position of the guide member 3 on the horizontal surface thereof, and the CPU 80 rotates the second and the third motors 50, 51 by a rotation angle obtained by calculation and thereby moves the guide member 3 by the moving amount to correct the position of the guide member 3 on the horizontal surface thereof.

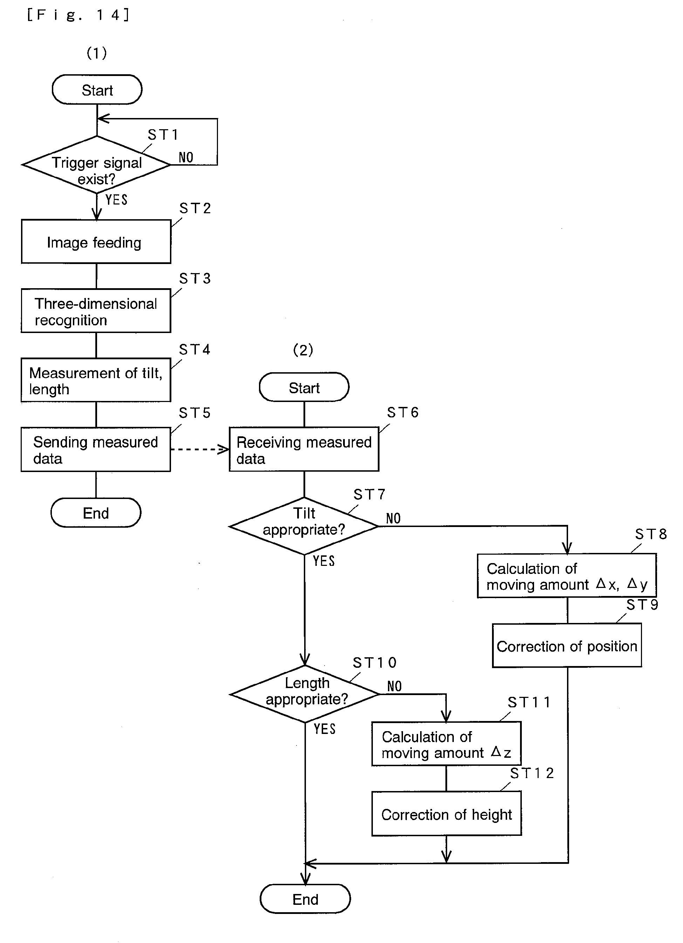

Fig. 14 shows another embodiment of the control of the image processing device 7 and the control device 8. In ST1 shown in Fig. 14(1), when a trigger signal is input from the timing system 9 into the image processing device 7, the CPU 70 sends an imaging instruction to the imaging devices 6A to 6C to take an image of the falling gob g at the same time. The two-dimensional images of the gob g obtained by each of the imaging devices 6A to 6C are fed into the image processing device 7 (ST2) and stored in the respective image memories 73A to 73C, then the CPU 70 performs processing for three-dimensional image recognition such as the mapping of the image points on the three two-dimensional images thereby obtaining the spatial position data (three-dimensional coordinate data) of the gob g and storing the data in the RAM 72 (ST3).

Next, the CPU 70 instructs the measuring unit 74 to perform processing for measuring the length L and the tilt θx in the x direction and the tilt θy in the y direction of the gob g from the spatial position data and sends the measured data to the control device 8 (ST 4, 5). The CPU 80 in the control device 8, when receiving the measured data of the length L and the tilts θx and θy in ST 6 shown in Fig. 14(2), determines in the first place whether or not each measured data of the tilt θx and θy is within a permissible range (ST7). If at least either one of the tilts θx and θy is not within the permissible range, the program advances from ST7 to ST8 and the CPU 70 calculates a moving amount Δx in the x direction or a moving amount Δy in the y direction of the guide member 3 as correction data for correcting the position of the guide member 3 on the horizontal surface thereof from the measured value of the tilt θx or θy.

When the moving amount of the guide member 3 is calculated in ST8, the program advances from ST8 to ST9 in order to correct the position of the guide member 3 on the horizontal surface thereof, and the CPU 80 rotates the second and the third motors 50, 51 by a rotation angle obtained by calculation and thereby moves the guide member 3 by the moving amount to correct the position of the guide member 3 on the horizontal surface thereof.
In said ST7, if both of the tilts θx and θy are within the permissible range, the program advances from ST7 to ST10 and it is determined whether or not the length L of the gob g is appropriate by comparing the measured data of the length L with a set value. If the length L is not appropriate, the program advances from ST10 to ST11 and the CPU 70 calculates the moving amount Δz of the shear blades 20A, 20B as correction data for correcting the height of the cutter mechanism 2 from the difference ΔL between the measured value and the set value of the length L of the gob g.

When the moving amount Δz of the shear blades 20A, 20B is calculated in ST11, the program advances from ST11 to ST12 in order to correct the height of the shear blades 20A, 20B, and the CPU 80 rotates the first motor 40 by a rotation angle obtained by calculation and thereby moves the shear blades 20A, 20B by the moving amount Δz to correct the height of the shear blades.

Notably, when the steps (ST8, 9) for the correction of the tilt are performed in response to the negative determination in said ST7, the steps ST10 to 12 for the correction of the length are skipped, however if a positive determination is made for an image subsequently fed in ST7, the steps ST10 to 12 for the correction of the length are to be performed.

### [DESCRIPTION OF SYMBOLS]

1 molten glass feeder mechanism
2 cutter mechanism
3 guide member
4 cutter position moving mechanism
5 guide position moving mechanism
6 gob observing device
7 image processing device
8 control device
10 spout
11 orifice
12 plunger
40, 50, 51 motor

## Claims

1. A gob producing device comprising: a molten glass feeder mechanism which has an orifice provided at the bottom portion of a spout in which molten glass is held and a plunger vertically movably arranged in the spout to push out the molten glass through the orifice; and a cutter mechanism which is located below the orifice and cuts the molten glass pushed out from the orifice so as to be suspended therefrom thereby producing a gob, wherein
the gob producing device is further provided with a cutter position moving mechanism for adjusting the height of the cutter mechanism by vertically moving said cutter mechanism with respect to the orifice, a gob observing device for obtaining the spatial position data of the gob by observing a three-dimensional view of the gob falling after being cut by the cutter mechanism, a length measuring means for measuring the length of the gob from said spatial position data of the gob, a determining means for determining acceptance or rejection with respect to the length of the gob by comparing a measured length of the gob with a set value, a computing means for calculating correction data to correct the height of the cutter mechanism from a difference between a measured value and a set value of the length of the gob when the length of the gob is determined as being not appropriate, and a control means for moving the cutter mechanism by controlling the operation of the cutter position moving mechanism on the basis of said correction data.

2. A gob producing device comprising: a molten glass feeder mechanism which has an orifice provided at the bottom portion of a spout in which molten glass is held and a plunger vertically movably arranged in the spout to push out the molten glass through the orifice; and a cutter mechanism which is located below the orifice and cuts the molten glass pushed out through the orifice so as to be suspended therefrom thereby producing a gob, wherein
the gob producing device is further provided with a guide member which is located below the cutter mechanism and drops the gob with controlling the swing of the gob when the gob is cut off by the cutter mechanism, a guide position moving mechanism for adjusting the position of the guide member on the horizontal surface with respect to the falling path of the gob by moving said guide member in given two directions orthogonal to each other on the horizontal surface, a gob observing device for obtaining the spatial position data of the gob by observing a three-dimensional view of the falling gob cut off by the cutter mechanism, a tilt measuring means for measuring the tilt of the gob in two directions orthogonal to each other on said horizontal surface from said spatial position data of the gob, a determining means for determining whether or not the measured value of the tilt of the gob is within the permissible range, a computing means for calculating correction data to correct the position of the guide member on the horizontal surface thereof from the measured value of the tilt of the gob when the tilt of the gob is determined as being not within the permissible range, and a control means for moving the guide member by controlling the operation of the guide position moving mechanism on the basis of said correction data.

3. The gob producing device according to claim 1, wherein said cutter position moving mechanism includes as a drive source a motor rotating in a forward or backward direction respectively so as to move the cutter mechanism in a vertical direction with respect to the orifice by a distance corresponding to the rotation angle of the motor.

4. The gob producing device according to claim 1 or 3, further comprising: a guide member which is located below the cutter mechanism and drops the gob with controlling the swing of the gob when the gob is cut off by the cutter mechanism; a guide position moving mechanism for adjusting the position of the guide member on the horizontal surface with respect to the falling path of the gob by moving said guide member in given two directions orthogonal to each other on the horizontal surface; a tilt measuring means for measuring the tilt of the gob in two directions orthogonal to each other on said horizontal surface from said spatial position data of the gob; a determining means for determining whether or not the measured value of the tilt of the gob is within the permissible range; a computing means for calculating correction data to correct the position of the guide member on the horizontal surface thereof from the measured value of the tilt of the gob when the tilt of the gob is determined as being not within the permissible range; and a control means for moving the guide member by controlling the operation of the guide position moving mechanism on the basis of said correction data.

5. The gob producing device according to claim 2 or 4, wherein said guide position moving mechanism includes as drive sources a first and a second motors rotating in a forward or backward direction respectively so as to move the guide member by a distance corresponding to the rotation angle of the first motor in one direction among said two directions and move the guide member by a distance corresponding to the rotation angle of the second motor in the other direction among said two directions.
